# EUROPEAN PATENT SPECIFICATION

(11) **EP 1 039 197 B1**
(45) Date of publication and mention of the grant of the patent: **20.08.2003**
(21) Application number: 00104854.5
(22) Date of filing: 07.03.2000
(51) Int. Cl.: F16L 3/233

(54) **Safety clamp with sealing device**
Sperrbares Sicherungshalteband
Attache de sécurité verrouillable

(30) Priority: 24.03.1999 IT PD990035
(43) Date of publication of application: 27.09.2000
(73) Proprietor: Sapiselco s.r.l., 35020 Saonara (IT)
(72) Inventor: Griggio, Stefano, 35020 Saonara (IT)
(74) Representative: Gustorf, Gerhard, Dipl.-Ing.

(56) References cited:
- WO-A-90/02284
- FR-A- 1 368 233
- US-A- 5 502 877

## Description

The present invention concerns safety clamps. To hold tube or wire bundles together, to close bags or other similar objects clamps are used, which comprise a notched band and a perforated head. Inside the hole present on the head there is an elastic tooth that permits the passage of the notched band in one direction only. Document WO-A-9002284 discloses a clamp of this kind.

These clamps do not ensure that the closure cannot be tampered with.

Furthermore, after the clamp has been fastened, the exceeding portion of band is generally cut. The resulting stump is rather unaesthetic and furthermore it may also cause slight injuries to the hands, especially when these clamps are used to close bags.

In order to eliminate the drawbacks mentioned above, a new clamp has been designed, which is provided with special details suitable for ensuring either the user's safety and the correct sealing of the clamp itself.

The object of this patent is a new safety clamp with sealing device.

The clamp according to the invention comprises the features according to claim 1.

The two wings or tangs are elastic, are arranged as an arrow with the point directed towards the free end of the notched band and extend beyond the width of the notched band. Said wings can bend in such a way as to be parallel to each other and adhere to band edges, so that the distance between them does not exceed the width of the band itself.

Along the notched band one or more rectangular holes are provided, whose width is inferior to that of the band and at the same time equal or superior to that of the end of the band itself. The wings or arched tangs and the holes provided along the notched band are combined in such a way as to seal the clamp.

In fact, once the clamp has been fastened in its definitive position, with the notched band inserted in the head with elastic tooth, it is sufficient keep bending the free end until it fits, together with the wings or arched tangs, into the hole of the notched band section that has already passed through the clamp head.

The wings or tangs bend and adhere to the band as they pass through the hole and return to their original position immediately afterwards.

Any attempt at withdrawing the notched band from the clamp head without damaging it will be unsuccessful, thanks to the presence of the end with wings or arched tangs inserted in the band hole.

Analogously, any attempt at withdrawing the band end through the hole in which it has been inserted will be unsuccessful, too, thanks to the presence of the wings or arched tangs that open, thus returning to their original position, after passing through the hole.

The following is just an example illustrated in the enclosed drawings, wherein:

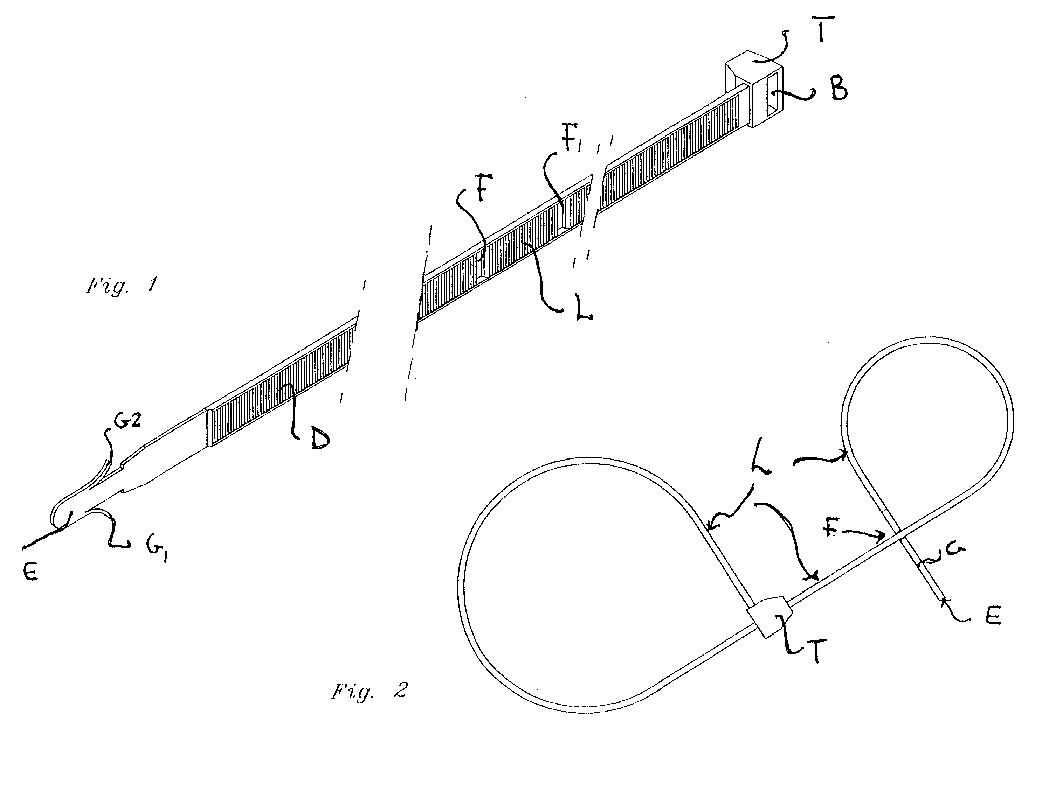

- Fig. 1 shows the clamp before use, with the head indicated by (T) provided with the hole (B), in which the free end (E) is inserted. A tooth positioned inside the hole (B) (not visible in the figure) slides on the notches (D) provided on the linear part, that is, on the band (L) of the clamp, thus preventing its movement in the opposite direction.

Once the clamp has been tightened around the object, or the package, the point (E) is bent and inserted in the hole (F), thus obtaining another slot. The wings or hooks or arched tangs (G) expand and prevent the withdrawal of the point (E) through the hole (F).

Figure 2 shows the clamp after it has been tightened and sealed, with the end (E) inserted first in the hole of the head (T) and successively in one of the holes (F).

Therefore, with reference to the above description and the enclosed drawings, the following claims are put forth.

## Claims

1. Clamp with perforated head (T) provided with inner tooth and notched band (L), **characterized in that** its free end (E) is provided with one, two or more opening wings (G1,G2) and the notched band (L) is provided with one or more holes (F,F1).

2. Clamp according to claim 1, **characterized in that** the distance between the ends of the wings (G1,G2) positioned on the free end (E) in their natural position, that is, when they are opened, exceeds the maximum size of the hole/holes (F,F1) provided on the notched band (L), so that said wings (G1,G2), when the band (L) is pulled after its insertion in the hole (F,F1), open and prevent its withdrawal.

## Patentansprüche

1. Spannklemme mit einem durchbohrten, einen inneren Zahn aufweisenden Kopf (T) und mit einem gezahnten Band (L), **dadurch gekennzeichnet, daß** am freien Ende (E) des Bandes ein, zwei oder mehr Spreizflügel (G1, G2) ausgebildet sind und daß das gezahnte Band (L) eine oder mehr Öffnungen (F, F1) hat.

2. Spannklemme nach Anspruch 1, **dadurch gekennzeichnet, daß** der Abstand zwischen den Enden der Spreizflügel (G1, G2) am freien Ende (E) in ihrer natürlichen, d. h. geöffneten Stellung größer als die Maximalabmessung der Öffnung bzw. Öffnungen in dem Band (L) ist, so daß sich die Flügel (G1, G2) nach dem Durchführen des Bandes (L) durch die Öffnung (F, F1) und dem Anziehen des Bandes spreizen und ein Herausziehen des Bandes verhindern.

## Revendications

1. Attache comprenant une tête perforée (T) avec une dent interne et un ruban denté (L), **caractérisée par le fait que** l'extrémité libre (E) du ruban présente une, deux ou plusieures ailettes écartables (G1, G2) et que le ruban denté (L) est muni d'une ou plusieurs ouvertures (F, F1).

2. Attache selon la revendication 1, **caractérisée par le fait que** la distance entre les extrémitées des deux ailettes (G1, G2) positionées à l'extrémitée libre (E), dans leur position naturelle c'est à dire ouverte, est plus grande que la dimension maximale de l'ouverture ou des ouvertures (F, F1) prévues dans le ruban denté (L) de sorte que lesdites ailettes (G1, G2), après le passage du ruban à travers l'ouverture (F, F1) et sa tension, s'écartent et empèchent son extraction.
